# EUROPÄISCHE PATENTSCHRIFT

(11) **EP 1 403 328 B1**
(45) Veröffentlichungstag und Bekanntmachung des Hinweises auf die Patenterteilung: **25.10.2006**
(21) Anmeldenummer: 02405827.3
(22) Anmeldetag: 26.09.2002
(51) Int. Cl.: C09B 45/18, C09B 62/515, C09D 11/00

(54) **Kupferkomplex-Monoazofarbstoffe, deren Herstellung und Verwendung**
Copper complex monoazo dyes, their preparation and their use
Colorants monoazoiques complexes de cuivre, leur préparation et leur utilisation

(43) Veröffentlichungstag der Anmeldung: 31.03.2004
(73) Patentinhaber: ILFORD Imaging Switzerland GmbH, 1723 Marly 1 (CH)
(72) Erfinder: Baettig, Kurt, 1724 Praroman-Le Mouret (CH)

(56) Entgegenhaltungen:
- EP-A- 1 086 999
- GB-A- 1 372 368
- US-A- 4 939 243
- PATENT ABSTRACTS OF JAPAN vol. 012, no. 242 (C-510), 8. Juli 1988 (1988-07-08) -& JP 63 030573 A (CANON INC;OTHERS: 01), 9. Februar 1988 (1988-02-09)
- PATENT ABSTRACTS OF JAPAN vol. 2000, no. 12, 3. Januar 2001 (2001-01-03) -& JP 2000 265099 A (MITSUBISHI CHEMICALS CORP), 26. September 2000 (2000-09-26)

## Beschreibung

### Technisches Gebiet

Die Erfindung bezieht sich auf neue Kupferkomplex-Monoazofarbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, in dem ungeladene Tröpfchen in den Auffangbehälter abgelenkt werden.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanoporöse anorganische Verbindungen wie Oxide oder Oxid-hydroxide enthalten.
Auf solche Weise hergestellte Bilder müssen eine gute Haltbarkeit auch unter ungünstigen klimatischen Bedingungen aufweisen. Das ist nur mit einem, auf diese nanoporösen Aufzeichnungsmaterialien, fein abgestimmten System von Tinten (respektive den darin enthaltenen Farbstoffen) möglich.
Solche Aufzeichnungsmaterialien mit heute erhältlichen Tinten erfüllen nicht alle an sie gestellten Anforderungen. Insbesondere muss die Lagerbeständigkeit der auf diesen Materialien hergestellten Bilder verbessert werden. Solche Bilder sind im Kontakt mit Aussenluft, die normalerweise Verunreinigungen wie beispielsweise Ozon und Stickstoffoxide enthält, auch im Dunkeln nicht besonders stabil. Sie werden im Kontakt mit der Aussenluft nämlich innerhalb kurzer Zeitspannen sehr stark verändert oder sogar zerstört. Diese Phänomene werden beispielsweise im Hardcopy Supplies Journal 6 (7), 35 (2000) beschrieben.

Obwohl schon eine ganze Anzahl Kupferkomplex-Monoazofarbstoffe mit purpurnem oder rotem Farbton zur Verwendung im Tintenstrahldruck vorgeschlagen worden sind, vermag noch keiner alle an ihn gestellten Anforderungen zu erfüllen, insbesondere nicht in Bezug auf die Lagerfähigkeit von ihn enthaltenden Bildern im Dunkeln im Kontakt mit Verunreinigungen enthaltender Aussenluft.

Der Kupferkomplex-Monoazofarbstoff der Formel (I) wird in der Patentanmeldung EP 1'086'999 (Beispiel 19) beschrieben.

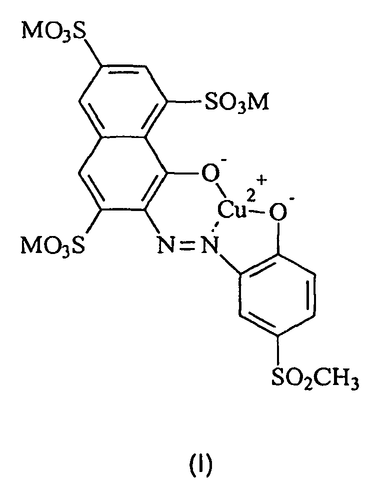

Die Kupferkomplex-Monoazofarbstoffe der Formeln (II) und (III) werden in der Patentanmeldung JP 2000-265'099 beschrieben.

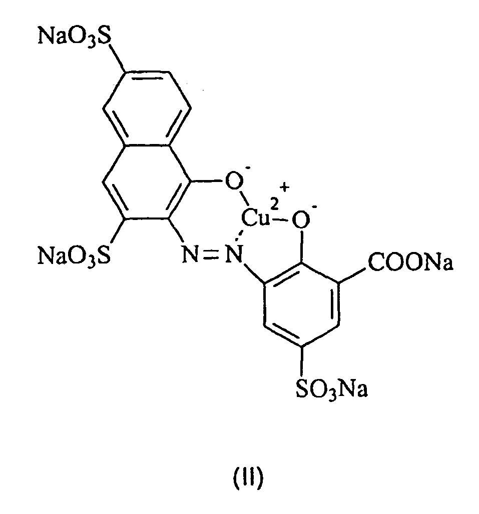

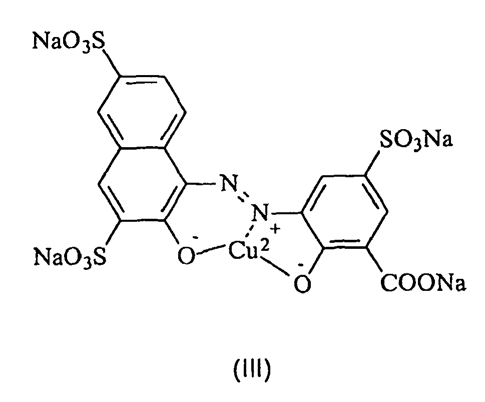

Der Kupferkomplex-Monoazofarbstoff der Formel (IV) wird in der Patentanmeldung JP 63-30'573beschrieben.

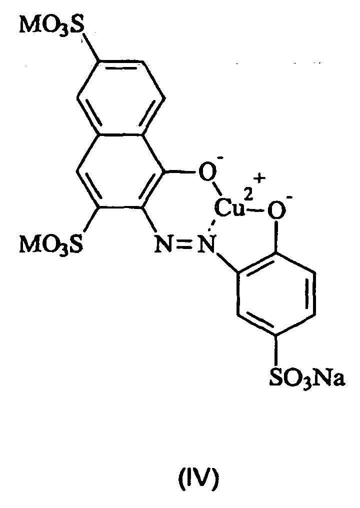

Im Patent GB 1'372'368 werden Kupferkomplex-Monoazofarbstoffe der Formeln (V) und (VI) beschrieben, in denen R₁ ein β-Sulfatoethyl-Rest ist.

Im Patent US 4'939'243 werden Kupferkomplex-Monoazofarbstoffe der Formeln (V) und (VI) beschrieben, in denen R₁ ein β-Sulfatoethyl-Rest oder ein Vinylrest ist.

Alle diese Kupferkomplex-Monoazofarbstoffe des Standes der Technik vermögen in der Praxis im Tintenstrahldruck nicht alle an sie gestellten Anforderungen zu erfüllen, wenn es darum geht, mit Ihnen Tinten herzustellen, die auf nanoporösen Aufzeichnungsmaterialien Purpurfärbungen mit möglichst hoher Brillanz ergeben und gleichzeitig die Lagerfähigkeit der auf diesen Materialien mit diesen Farbstoffen hergestellten Bilder im Dunkeln im Kontakt mit Verunreinigungen enthaltender Aussenluft verbessern, ebenso wie die Diffusionsbeständigkeit der Farbstoffe bei hoher Feuchtigkeit und Wärme.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Brohzing"). Sie müssen Bilder mit einer hohen optischen Dichte, einer guten Wasserfestigkeit, einer guten Lichtechtheit und einer guten Lagerstabilität auch unter ungünstigen Bedingungen ergeben. Sie müssen in der Tinte stabil sein, auch wenn diese lange Zeit unter ungünstigen Bedingungen gelagert wird.

Verschiedene Zusammensetzungen für Tinten sind vorgeschlagen worden. Typische Tinten enthalten einen oder mehrere Farbstoffe oder Pigmente, Wasser, ganische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte ergibt Bilder mit hervorragender Lagerbeständigkeit bei hoher Temperatur und Feuchtigkeit.
(6) Die Tinte verstopft die Tintenstrahldruckerdüsen nicht, auch wenn diese längere Zeit während Druckpausen nicht abgedeckt sind.
(7) Die Tinte kann lange Zeit gelagert werden, ohne dass ihre Qualität abnimmt.
(8) Die physikalischen Eigenschaften der Tinte, wie Viskosität, Leitfähigkeit und Oberflächenspannung liegen alle innerhalb vorgegebener, für die Anwendung geeigneter Grenzen.
(9) Die Tinte muss ungiftig, unbrennbar und unschädlich sein.

### Beschreibung der Erfindung

Ziel der Erfindung ist die Bereitstellung neuer Kupferkomplex-Monoazofarbstoffe mit rotem oder purpurnem Farbton, die gleichzeitig lichtecht, wasserfest, diffusionsbeständig und gut löslich sind. Sie ergeben Bilder oder Färbungen mit allgemein guten Eigenschaften, insbesondere im Tintenstrahldruck, wo sie Bilder auf nanoporösen Aufzeichnungsmaterialien mit verbesserter Lagerbeständigkeit im Dunkeln im Kontakt mit Verunreinigungen enthaltender Aussenluft ergeben und die auch bei längerer Lagerung bei hoher Temperatur und Feuchtigkeit nicht oder höchstens in unbedeutendem Ausmass unscharf werden.
Ein weiteres Ziel der Erfindung ist die Bereitstellung flüssiger Farbstoffpräparationen, die diese Farbstoffe enthalten, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Die vorliegende Erfindung bezieht sich auf neue Kupferkomplex-Monoazofarbstoffe der allgemeinen Formeln (V) 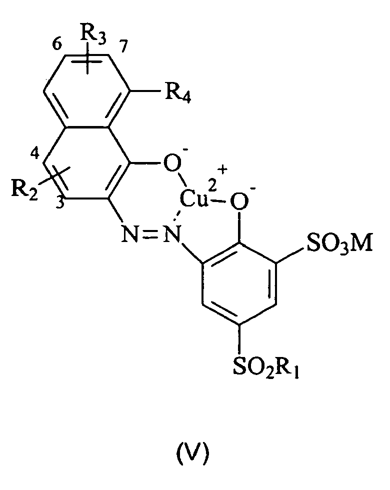 und (VI) 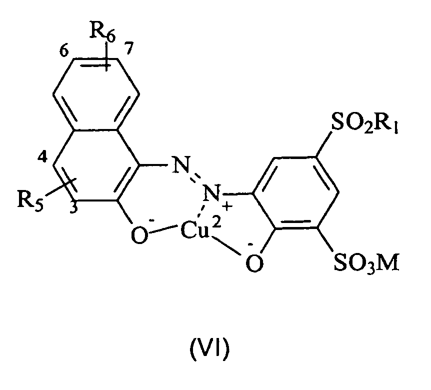 worin
- M: für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht;
- R₁: für Alkyl mit 1 bis 4 Kohlenstoffatomen oder mit einer Hydroxylgruppe substituiertes Alkyl mit 2 bis 4 Kohlenstoffatomen steht;
- R₂: für Wasserstoff oder SO₃M steht;
- R₃: für Wasserstoff, SO₃M, NH₂, NHCOD₁, wobei D₁ unsubstituiertes oder substituiertes Alkyl mit 1 bis 6 Kohlenstoffatomen, wobei die Substituenten aus der Gruppe bestehend aus Carboxyl, Chlor und Brom ausgewählt werden, bedeutet; Phenyl oder mit Methyl, Chlor, Brom, Carboxyl oder Sulfo substituiertes Phenyl; oder NHSO₂D₂, steht, wobei D₂ unsubstituiertes Alkyl mit 1 bis 6 Kohlenstoffatomen, Phenyl oder mit Methyl, Fluor, Chlor oder Brom substituiertes Phenyl bedeutet;
- R₄: für Wasserstoff, SO₃M, NH₂, NHSO₂D₃, wobei D₃ Alkyl mit 1 bis 6 Kohlenstoffatomen bedeutet; Phenyl oder mit Methyl, Fluor, Chlor oder Brom substituiertes Phenyl steht;
- R₅: für Wasserstoff, SO₃M, COOM oder COND₄D₅ steht, wobei D₄ und D₅ unabhängig voneinander Wasserstoff, unsubstituiertes oder substituiertes Alkyl mit 1 bis 6 Kohlenstoffatomen, wobei die Substituenten aus der Gruppe bestehend aus Methoxy, Ethoxy, lsopropoxy und Hydroxyl ausgewählt werden; bedeuten
und
- R₆: für Wasserstoff oder SO₃M steht.

Bevorzugt sind Kupferkomplex-Monoazofarbstoffe, bei denen R₂, R₃, R₄, R₅ und R₆ die gleiche Bedeutung wie vorhin angegeben haben;
- R₁: für Alkyl mit 1 bis 4 Kohlenstoffatomen steht
und
- M: für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 12 Kohlenstoffatomen aufweist, steht.

Weiter bevorzugt sind Kupferkomplex-Monoazofarbstoffe, bei denen M, R₁, R₂, R₅ und R₆ die gleiche Bedeutung wie vorhin angegeben haben und
R₃, R₄ unabhängig voneinander für Wasserstoff oder SO₃M stehen.

Besonders bevorzugt sind Kupferkomplex-Monoazofarbstoffe, bei denen M, R₁, R₂, R₃, R₄ und R₆ die gleiche Bedeutung wie vorhin angegeben haben und
R₅ für Wasserstoff, SO₃M oder COOM steht.
Bevorzugt werden als Metallkationen die Kationen der Alkalimetalle (Li, Na, K, Rb und Cs) und der Erdalkalimetalle (Mg, Ca, Sr und Ba).
Als Ammoniumkationen werden unsubstituiertes Ammonium, Triethanolamin, Diethanolamin, Dimethylethanolamin, Ethanolamin und 2,2'-(Ethylendioxy)-diethylamin bevorzugt.

Die hergestellten Farbstoffe der allgemeinen Formel (V) sind zusammen mit ihrem Absorptionsmaximum in wässriger Lösung in Tabelle 1 zusammengestellt. M ist für alle Farbstoffe Na, R₂ Sulfo.

**Tabelle 1**

| Verbindung Nr. | R₁ | Position von R₂ | R₃/Position | R₄ | λₘₐₓ in H₂O (nm) |
|---|---|---|---|---|---|
| 10 | CH₂CH₃ | 3 | SO₃M/6 | H | 537 |
| 11 | CH₂CH₃ | 3 | H | SO₃M | 538 |
| 12 | CH₃ | 3 | SO₃M/6 | H | 537 |
| 13 | CH₃ | 3 | SO₃M/6 | SO₃M | 545 |
| 14 | CH₃ | 3 | H | SO₃M | 538 |
| 15 | CH₃ | 4 | H | SO₃M | 530 |
| 16 | CH₃ | 3 | NHCO(CH₂)₂COOM/7 | H | 538 |
| 17 | CH₃ | 3 | SO₃M/6 | NHSO₂CH₃ | 548 |
| 18 | CH₃ | 3 | SO₃M/6 | 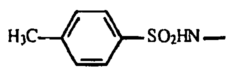 | 551 |

Die hergestellten Farbstoffe der allgemeinen Formel (VI) sind zusammen mit ihrem Absorptionsmaximum in wässriger Lösung in Tabelle 2 zusammengestellt

**Tabelle 2**

| Verbindung Nr. | R₁ | R₅/Position | R₆/Position | M | λₘₐₓ in H₂O (nm) |
|---|---|---|---|---|---|
| 100 | CH₃ | SO₃M/3 | SO₃M/6 | Na | 527 |
| 101 | CH₃ | COOM/3 | SO₃M/6 | Na | 525 |
| 102 | CH₂CH₃ | SO₃M/3 | SO₃M/6 | Na | 527 |
| 103 | CH₂CH₃ | SO₃M/3 | SO₃M/6 | NH₄ | 527 |
| 104 | CH₃ | CON(CH₂CH₂OCH₃)₂/3 | H | Na | 531 |

Die Verbindungen der allgemeinen Formeln (V) und (VI) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter-Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie beispielsweise Tetramethylammonium oder Tetrabutylammonium.

Weiter betrifft die Erfindung nicht nur reine Kupferkomplex-Monoazofarbstoffe der allgemeinen Formeln (V) und (VI), sondern auch Gemische dieser Verbindungen.

Die Erfindung betrifft weiterhin ein Verfahren zur Herstellung der erfindungsgemässen Kupferkomplex-Monoazofarbstoffe der Formeln (V) und (VI), das dadurch gekennzeichnet ist, dass
ein aromatisches Amin der allgemeinen Formel (VII) 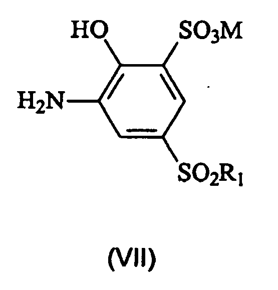 worin R₁ und M die gleiche Bedeutung wie vorher angegeben haben, diazotiert und anschliessend mit einer Verbindung der Formel (VIII) 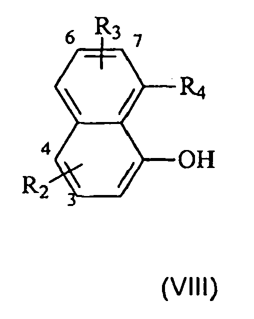 oder (IX) 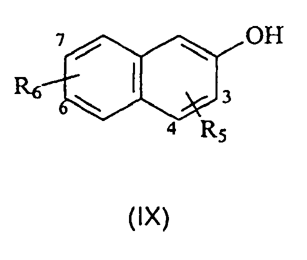 worin R₂, R₃, R₄, R₅ und R₆ die gleiche Bedeutung wie vorher angegeben haben, zum metallfreien Zwischenprodukt-Farbstoff gekuppelt wird und
der so erhaltene metallfreie Zwischenprodukt-Farbstoff anschliessend mit einem Kupferungsreagens zu den erfindungsgemässen Kupferkomplex-Monoazofarbstoffen der allgemeinen Formeln (V) und (VI) umgesetzt wird.

Die erfindungsgemässen Kupferkomplex-Monoazofarbstoffe der allgemeinen Formeln (V) und (VI) färben cellulosehaltige Materialien, Papier, Baumwolle und Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen, die mindestens einen Kupferkomplex-Monoazofarbstoff der allgemeinen Formeln (V) oder (VI) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Farbstoffe oder Mischungen von Kupferkomplex-Monoazofarbstoffen der allgemeinen Formeln (V) oder (VI) sind ausgezeichnete Farbstoffe zur Herstellung von Tinten für den Tintenstrahldruck.
Die erfindungsgemässen Kupferkomplex-Monoazofarbstoffe der Formeln (V) oder (VI) sind gut mit anderen Purpurfarbstoffen kombinierbar, insbesondere solchen, wie sie beispielsweise in den Patentanmeldungen WO 96/24'636, EP 0'755'984, EP 0'918'074, EP 1'160'291, EP 1'219'682 und EP 1'367'098 beschrieben worden sind.

Eine solche Tinte enthält eine oder mehrere der erfindungsgemässen Verbindungen in einem flüssigen wässrigen Lösungsmittel. Die Tinte enthält 0.5 bis 20 Gewichtsprozent, vorzugsweise 0.5 bis 8 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind beispielsweise in den Patenten US 4'626'284, US 4'703'113 und US 4'963'189 und den Patentanmeldungen GB 2'289'473 und EP 0'425'150 und EP 0'597'672 beschrieben worden.

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Die Verbindung Nr. 10 aus Tabelle 1 wurde folgendermassen hergestellt:

### Farbstoff-Diazokomponente:

Die Verbindung der Formel (X) 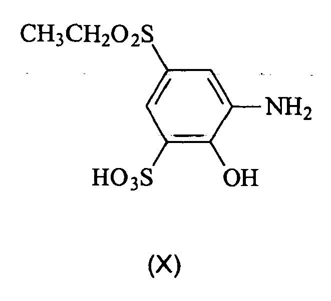 wurde folgendermassen hergestellt:
41.5 g (0.2 Mol) 2-Amino-4-(ethylsulfonyl)phenol (Gehalt 97 %, erhältlich bei Sigma-Aldrich, USA) wurden portionenweise unter Eiskühlung zu 100 ml Oleum (45 %) so zugegeben, dass die Temperatur 40°C nicht überstieg. Nach Ende der Zugabe wurde der Ansatz 18 Stunden bei einer Temperatur von 75° C gerührt. Anschliessend wurde das Gemisch auf Eis gegossen, das ausgefallene Produkt abgenutscht und durch Waschen mit Wasser gereinigt. Nach Trocknung erhielt man 44.3 g der Verbindung der Formel (X).

### Suspension A:

9.4 g (30 mMol) der Verbindung der Formel (X) (Gehalt 90 %) wurden in 40 ml Wasser suspendiert und der pH-Wert durch Zugabe von Natronlauge (30 %) auf 7.0 eingestellt. Die resultierende Lösung wurde auf eine Temperatur von 0° C bis 5° C abgekühlt und es wurden 7.5 ml einer wässrigen Natriumnitritlösung (4N) zugegeben. Bei einer Temperatur von 0° C bis 10° C wurden unter Rühren während 5 Minuten 7.5 ml wässrige Salzsäurelösung (37 %) zugetropft und es wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs 10

Bei einer Innentemperatur von 5° C bis 10° C wurde zur Suspension von 10.5 g (30 mMol) des Binatriumsalzes der 1-Naphthol-3,6-disulfonsäure (erhältlich bei Acros Organics, Geel, Belgien) in 50 ml Wasser unter Rühren während 30 Minuten die obige Suspension A zugegeben und der pH-Wert durch gleichzeitiges Zudosieren von Natronlauge (30 %) zwischen 7.0 und 8.0 gehalten. Nach beendeter Zugabe wurde 1 Stunde bei einer Temperatur zwischen 5° C und 20° C und anschliessend 18 Stunden bei Raumtemperatur weitergerührt.
Anschliessend wurde die Farbstoffsuspension auf eine Temperatur von 60° C erwärmt und unter starken Rühren während 30 Minuten portionenweise mit 6.0 g (30 mMol) Kupfer(II)-acetat-Monohydrat (erhältlich bei Fluka Chemie AG, Buchs, Schweiz) versetzt und der pH-Wert durch gleichzeitiges Zudosieren von Natronlauge (30 %) zwischen 7.0 und 8.0 gehalten. Nach beendeter Zugabe wurde 1 Stunde bei einer Temperatur von 60°C und dann 18 Stunden bei Raumtemperatur weitergerührt.
Der Farbstoff wurde durch Zugabe von Natriumchlorid ausgesalzen und der Niederschlag abfiltriert. Man erhielt so 14 g des Farbstoffs Nr. 10.

Anstelle der Natronlauge kann im letzten Herstellungsschritt auch ein Amin wie beispielsweise Ethanolamin, Diethanolamin oder Ammoniak zur Konstanthaltung des pH-Wertes verwendet werden.

Auf ähnliche Art und Weise können durch die Wahl geeigneter Ausgangsmaterialien die erfindungsgemässen Kupferkomplex-Monoazofarbstoffe 10 bis 18 und 100 bis 104 hergestellt werden.

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus den Tabellen 1 und 2 und Farbstoffe des bisherigen Standes der Technik eingesetzt werden. Für jeden Farbstoff wurden 2 Tinten hergestellt nämlich eine mit 100 % Farbstoff und eine, die nur 25 % Farbstoff enthält. 100 g jeder Tinte wurden hergestellt, indem die benötigte Menge Farbstoff (0.5 - 5 g), Glycerin (14 g), Propylenglykol (14 g), Tergitol 15-S-7, erhältlich bei Union Carbide Co., Houston, USA) (0.5 g) und eine Biocid-Lösung (Mergal K 10N, erhältlich bei Riedel-de-Haën, Seelze, Deutschland) (0.2 g) zusammen mit Wasser etwa 1 Stunde unter Rühren auf eine Temperatur von 50° C erwärmt wurden. Die erhaltene Lösung wurde auf eine Temperatur von 20° C abgekühlt und ihr pH-Wert auf 7.5 eingestellt. Anschliessend wurde die Lösung durch ein Millipore^{®}-Filter mit 0.5 µm Porendurchmesser abfiltriert. Die Farbstoffmenge wurde so gewählt, dass die optische Dichte des bedruckten Bildes für alle Farbstoffe möglichst gleich war.

### Anwendungsbeispiele von Tinten

Die Tinten wurden anschliessend mit Hilfe eines Tintenstrahldruckers des Typs Epson Stylus Photo 890 auf die nanoporösen Aufzeichnungsmaterialien Epson Premium Glossy Photo Paper und Konica Photolike QP, Quick Dry aufgebracht, wobei quadratische Farbfelder mit einer Fläche von 1 cm² gedruckt wurden, die ein fein abgestuftes Liniengitter aufweisen, bei dem die Quadrate eine Länge von 8 Pixeln und die Linien eine Breite von 2 Pixeln aufweisen. Die bedruckten Muster wurden 24 Stunden bei einer relativen Luftfeuchtigkeit von 59 % getrocknet.

### Aussenluft-Beständigkeit

Die optische Dichte der quadratischen Farbfelder wurde mit einem Densitometer Spectrolino^{™} der Firma Gretag Macbeth, Regensdorf, Schweiz gemessen. Anschliessend wurden die bedruckten Muster während 7 oder 14 Tagen in einem Umluftschrank im Dunkeln bei einer Temperatur von 20° C und einer relativen Feuchtigkeit von 50 % gelagert. Nach abgeschlossener Lagerung wurden die Muster erneut ausgemessen. Die Dichteunterschiede in Prozenten vor und nach der Lagerung sind ein Mass für das Ausmass des Farbstoffverlusts im Dunkeln im Kontakt mit Aussenluft.

### Ergebnisse

Die solchermassen bestimmten Werte der Farbstoffverluste für die Aussenluft-Beständigkeit im Dunkeln auf dem Aufzeichnungsmaterial Epson Premium Glossy Photo Paper nach 14 Tagen Lagerung sind für die konzentrierte Tinte in Tabelle 3 aufgeführt.

**Tabelle 3**

| Farbstoff | Optische Dichte vor der Lagerung | Optische Dichte nach der Lagerung | Prozentualer Dichteunterschied |
|---|---|---|---|
| 13 | 1.64 | 1.43 | 12.8 |
| I | 1.81 | 1.56 | 13.8 |
| 10 | 1.66 | 1.45 | 12.7 |
| II | 1.72 | 1.36 | 20.9 |
| IV | 1.82 | 0.98 | 42.4 |
| 102 | 1.57 | 1.46 | 7.0 |
| III | 1.49 | 1.31 | 12.1 |

Die solchermassen bestimmten Werte der Farbstoffverluste für die Aussenluft-Beständigkeit im Dunkeln auf dem Aufzeichnungsmaterial Epson Premium Glossy Photo Paper nach 7 Tagen Lagerung sind für die verdünnte Tinte in Tabelle 4 aufgeführt.

**Tabelle 4**

| Farbstoff | Optische Dichte vor der Lagerung | Optische Dichte nach der Lagerung | Prozentualer Dichteunterschied |
|---|---|---|---|
| 13 | 0.59 | 0.55 | 6.8 |
| I | 0.68 | 0.58 | 14.7 |
| 10 | 0.59 | 0.54 | 8.5 |
| II | 0.60 | 0.51 | 15.0 |
| IV | 0.61 | 0.35 | 42.6 |
| 102 | 0.59 | 0.56 | 5.1 |
| III | 0.56 | 0.51 | 8.9 |

Die solchermassen bestimmten Werte der Farbstoffverluste für die Aussenluft-Beständigkeit im Dunkeln auf dem Aufzeichnungsmaterial Konica Photolike QP, Quick Dry Photo Paper nach 14 Tagen Lagerung sind für die konzentrierte Tinte in Tabelle 5 aufgeführt.

**Tabelle 5**

| Farbstoff Nr. | Optische Dichte vor der Lagerung | Optische Dichte nach der Lagerung | Prozentualer Dichteunterschied |
|---|---|---|---|
| 13 | 1.57 | 1.37 | 12.7 |
| I | 1.75 | 1.48 | 15.4 |
| 10 | 1.64 | 1.43 | 12.8 |
| II | 1.73 | 1.43 | 17.3 |
| IV | 1.65 | 0.94 | 43.0 |
| 102 | 1.53 | 1.43 | 6.5 |
| III | 1.54 | 1.41 | 8.4 |

Die solchermassen bestimmten Werte der Farbstoffverluste für die Aussenluft-Beständigkeit im Dunkeln auf dem Aufzeichnungsmaterial Konica Photolike QP, Quick Dry Photo Paper nach 7 Tagen Lagerung sind für die verdünnte Tinte in Tabelle 6 aufgeführt.

**Tabelle 6**

| Farbstoff | Optische Dichte vor der Lagerung | Optische Dichte nach der Lagerung | Prozentualer Dichteunterschied |
|---|---|---|---|
| 13 | 0.59 | 0.53 | 10.2 |
| I | 0.67 | 0.57 | 14.9 |
| 10 | 0.58 | 0.52 | 10.3 |
| II | 0.64 | 0.56 | 12.5 |
| IV | 0.62 | 0.33 | 46.8 |
| 102 | 0.61 | 0.58 | 4.9 |
| III | 0.59 | 0.53 | 10.2 |

Ein Vergleich der gemessenen Farbstoffverluste von bedruckten Mustern in den Tabellen 3, 4, 5 und 6 zeigt klar, dass sowohl die konzentrierten wie auch die verdünnten Tinten mit dem erfindungsgemässen Kupferkomplex-Monoazofarbstoff 10 im Vergleich zu Tinten mit den strukturell ähnlichen, bekannten Kupferkomplex-Monoazofarbstoffen II und IV; dem erfindungsgemässen Kupferkomplex-Monoazofarbstoff 13 im Vergleich zu Tinten mit dem strukturell ähnlichen, bekannten Kupferkomplex-Monoazofarbstoff I und dem erfindungsgemässen Kupferkomplex-Monoazofarbstoff 102 im Vergleich zu Tinten mit dem strukturell ähnlichen, bekannten Kupferkomplex-Monoazofarbstoff III wesentlich bessere Beständigkeiten im Dunkeln gegenüber verunreinigter Aussenluft zeigen. Das bedeutet, dass mit den erfindungsgemässen Kupferkomplex-Monoazofarbstoffen im Tintenstrahldruck hergestellte Bilder auch bei ungünstigen Lagerungsbedingungen in verunreinigter Aussenluft weniger Farbverluste erleiden als entsprechende Bilder, die die bisher bekannten Kupferkomplex-Monoazofarbstoffe enthalten.

## Patentansprüche

1. Kupferkomplex-Monoazofarbstoffe der allgemeinen Formeln (V) 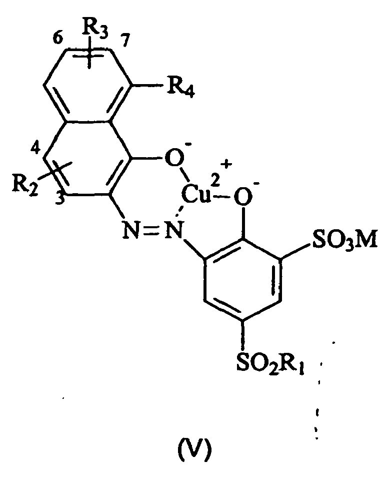 und (VI) 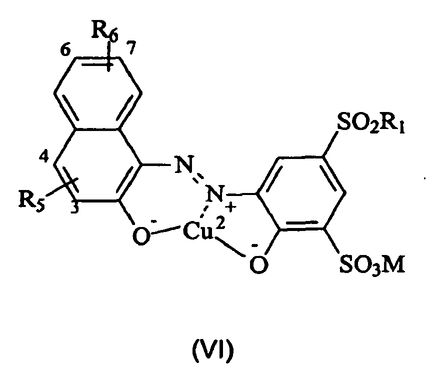 worin
M für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 18 Kohlenstoffatomen aufweist, steht;
R₁ für Alkyl mit 1 bis 4 Kohlenstoffatomen oder mit einer Hydroxylgruppe substituiertes Alkyl mit 2 bis 4 Kohlenstoffatomen steht;
R₂ für Wasserstoff oder SO₃M steht;
R₃ für Wasserstoff, SO₃M, NH₂, NHCOD₁, wobei D₁ unsubstituiertes oder substituiertes Alkyl mit 1 bis 6 Kohlenstoffatomen, wobei die Substituenten aus der Gruppe bestehend aus Carboxyl, Chlor und Brom ausgewählt werden, bedeutet; Phenyl oder mit Methyl, Chlor, Brom, Carboxyl oder Sulfo substituiertes Phenyl; oder NHSO₂D₂, steht, wobei D₂ unsubstituiertes Alkyl mit 1 bis 6 Kohlenstoffatomen, Phenyl oder mit Methyl, Fluor, Chlor oder Brom substituiertes Phenyl bedeutet;
R₄ für Wasserstoff, SO₃M, NH₂, NHSO₂D₃, wobei D₃ Alkyl mit 1 bis 6 Kohlenstoffatomen bedeutet; Phenyl oder mit Methyl, Fluor, Chlor oder Brom substituiertes Phenyl steht;
R₅ für Wasserstoff, SO₃M, COOM oder COND₄D₅ steht, wobei D₄ und D₅ unabhängig voneinander Wasserstoff, unsubstituiertes oder substituiertes Alkyl mit 1 bis 6 Kohlenstoffatomen, wobei die Substituenten aus der Gruppe bestehend aus Methoxy, Ethoxy, Isopropoxy und Hydroxyl ausgewählt werden; bedeuten
und
R₆ für Wasserstoff oder SO₃M steht.

2. Kupferkomplex-Monoazofarbstoffe nach Anspruch 1, **dadurch gekennzeichnet, dass**
R₁ für Alkyl mit 1 bis 4 Kohlenstoffatomen steht.

3. Kupferkomplex-Monoazofarbstoffe nach Anspruch 2, **dadurch gekennzeichnet, dass**
R₂, R₅, R₆ und M die gleiche Bedeutung wie in Anspruch 1 haben
und
R₃, R₄ unabhängig voneinander für Wasserstoff oder SO₃M stehen.

4. Kupferkomplex-Monoazofarbstoffe nach Anspruch 3, **dadurch gekennzeichnet, dass**
R₂, R₆ und M die gleiche Bedeutung wie in Anspruch 1 haben
und
R₅ für Wasserstoff, SO₃M oder COOM steht.

5. Kupferkomplex-Monoazofarbstoffe gemäss einem der Ansprüche 1 bis 4,
**dadurch gekennzeichnet, dass**
M für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 12 Kohlenstoffatomen aufweist, steht.

6. Verfahren zur Herstellung der Kupferkomplex-Monoazofarbstoffe nach Anspruch 1, **dadurch gekennzeichnet, dass**
ein aromatisches Amin der allgemeinen Formel (VII) 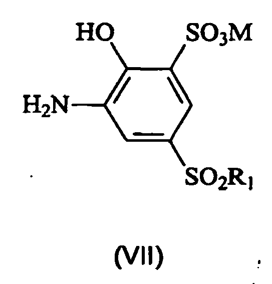 worin R₁ und M die gleiche Bedeutung wie in Anspruch 1 haben, diazotiert und anschliessend mit einer Verbindung der Formel (VIII) 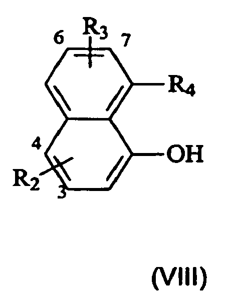 oder (IX) 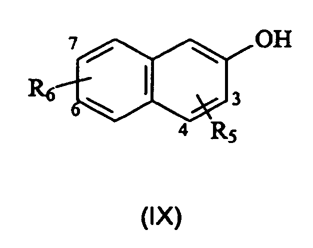 worin R₂, R₃, R₄, R₅ und R₆ die gleiche Bedeutung wie in Anspruch 1 haben, zum metallfreien Zwischenprodukt-Farbstoff gekuppelt wird und anschliessend dieser metallfreie Zwischenprodukt-Farbstoff mit einem Kupferungsreagens zu den Kupferkomplex-Monoazofarbstoffen der allgemeinen Formeln (V) und (VI) umgesetzt wird.

7. Verwendung der Kupferkomplex-Monoazofarbstoffe nach einem oder mehreren der Ansprüche 1 bis 5 zum Aufzeichnen von Schrift und Bildern auf einem Aufzeichnungsmaterial, zum Färben und Bedrucken von natürlichen oder synthetischen Fasermaterialen, nanoporösen Materialien, Leder und Aluminium.

8. Flüssige Farbstoffpräparationen, die mindestens einen Kupferkomplex-Monoazofarbstoff oder eine Mischung von Kupferkomplex-Monoazofarbstoffen nach einem oder mehreren der Ansprüche 1 bis 5 enthalten.

9. Tinten für den Tintenstrahldruck, die mindestens einen Kupferkomplex-Monoazofarbstoff oder eine Mischung von Kupferkomplex-Monoazofarbstoffen nach einem oder mehreren der Ansprüche 1 bis 5 enthalten.

10. Tinten für den Tintenstrahldruck, die neben mindestens einem Kupferkomplex-Monoazofarbstoff oder eine Mischung von Kupferkomplex-Monoazofarbstoffen nach einem oder mehreren der Ansprüche 1 bis 5 einen oder mehrere weitere Farbstoffe enthalten.

## Claims

1. Copper complex monoazo dyes of general formulas (V) 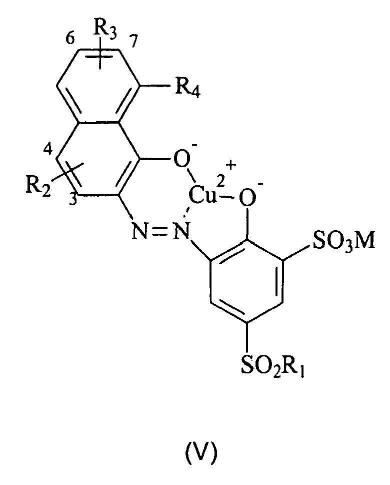 and (VI) 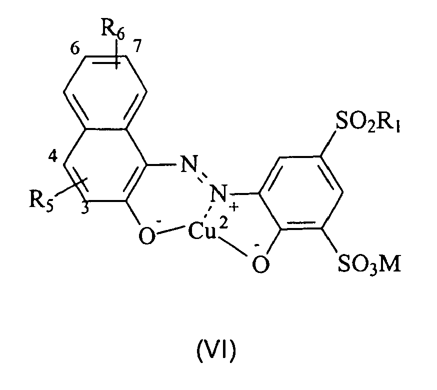 wherein
M represents hydrogen, a metal cation or an ammonium cation, which optionally may be substituted by one or more alkyl or substituted alkyl or hydroxyalkoxyalkyl groups each having from 1 to 18 C atoms;
R₁ represents alkyl having from 1 to 4 C atoms or hydroxy substituted alkyl having from 2 to 4 C atoms;
R₂ represents hydrogen or SO₃M;
R₃ represents hydrogen, SO₃M, NH₂, NHCOD₁, where D₁ represents unsubstituted or substituted alkyl having from 1 to 6 C atoms, where the substituents are selected from the group consisting of carboxy, chloro or bromo; phenyl or substituted phenyl, where the substituents are selected from the group consisting of methyl, chloro, bromo, carboxy or sulpho; or NHSO₂D₂, where D₂ represents unsubstituted alkyl having from 1 to 6 C atoms, phenyl or phenyl substituted by methyl, fluoro, chloro or bromo;
R₄ represents hydrogen, SO₃M, NH₂ or NHSO₂D₃, where D₃ represents alkyl having from 1 to 6 C atoms, phenyl or phenyl substituted by methyl, fluoro, chloro or bromo;
R₅ represents hydrogen, SO₃M, COOM or COND₄D₅, where D₄ and D₅ independently represent hydrogen, unsubstituted or substituted alkyl having from 1 to 6 C atoms, where the substituents are selected from the group consisting of methoxy, ethoxy, isopropoxy and hydroxy
and
R₆ represents hydrogen or SO₃M.

2. Copper complex monoazo dyes according to claim 1, **characterised in that**
R₁ represents alkyl having from 1 to 4 C atoms.

3. Copper complex monoazo dyes according to claim 2, **characterised in that** R₂, R₅, R₆ and M are as defined in claim 1
and
R₃, R₄ independently represent hydrogen or SO₃M.

4. Copper complex monoazo dyes according to claim 3, **characterised in that** R₂, R₆ and M are as defined in claim 1
and
R₅ represents hydrogen, SO₃M or COOM.

5. Copper complex monoazo dyes according to any one of claims 1 to 4, **characterised in that**
M represents hydrogen, a metal cation or an ammonium cation, which optionally may be substituted by one or more alkyl or substituted alkyl or hydroxyalkoxyalkyl groups each having from 1 to 12 C atoms.

6. Process for the preparation of copper complex monoazo dyes according to claim 1, **characterised in that**
an aromatic amine of general formula (VII), 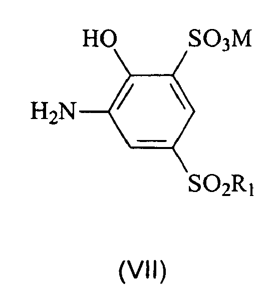 where R₁ and M are as defined in claim 1, is diazotised and subsequently coupled with a compound of formula (VIII) 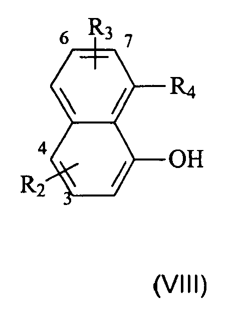 or (IX) 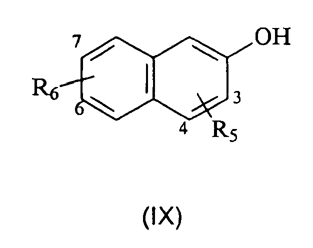 wherein R₂, R₃, R₄, R₅ and R₆ are as defined in claim 1,
to the intermediate metal free dye
and
the intermediate metal free dye obtained in this way is subsequently reacted with a coppering compound to form the copper complex dyes of general formulas (V) and (VI).

7. Process for recording text and images on recording sheets and for dying and printing natural or synthetic fibre materials, nanoporous materials, leather and aluminium by applying thereto a copper complex monoazo dye according to one or more of claims 1 to 5.

8. Liquid dye preparations comprising at least one copper complex monoazo dye or a mixture of copper complex monoazo dyes according to one or more of claims 1 to 5.

9. Inks for ink jet printing, comprising at least one copper complex monoazo dye or a mixture of copper complex monoazo dyes according to one or more of claims 1 to 5.

10. Inks for ink jet printing, comprising in addition to at least one copper complex monoazo dye or a mixture of copper complex monoazo dyes according to one or more of claims 1 to 5 one or more other dyes.

## Revendications

1. Colorants monoazoïques complexes de cuivre de formules générales (V) 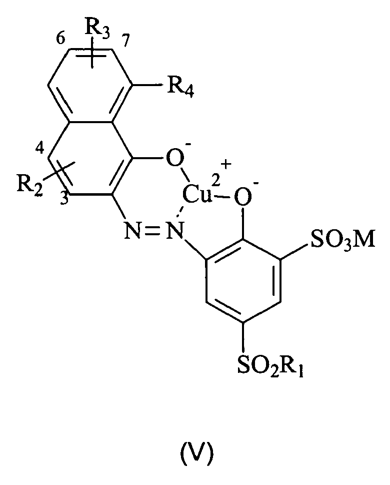 et (VI) 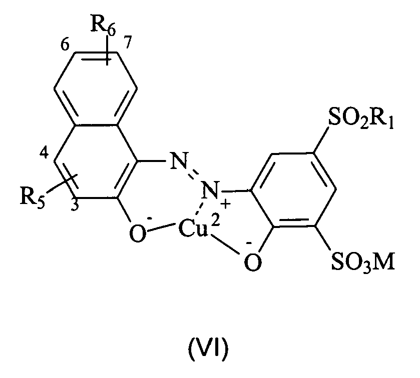 dans lesquelles
M représente un atome d'hydrogène, un cation métallique ou un cation ammonium optionnellement substitué par un ou plusieurs radicaux alkyle ou alkyle substitué ou hydroxyalcoxyalkyle ayant chacun de 1 à 18 atomes de carbone;
R₁ représente un radical alkyle ayant de 1 à 4 atomes de carbone ou un radical alkyle substitué par un groupe hydroxyle ayant de 2 à 4 atomes de carbone;
R₂ représente un atome d'hydrogène ou un radical SO₃M;
R₃ représente un atome d'hydrogène, un radical SO₃M, un radical NH₂, un radical NHCOD₁, où D₁ représente un radical alkyle non substitué ou substitué ayant de 1 à 6 atomes de carbone, dans lequel les substituants sont choisis parmi le groupe constitué du radical carboxyle, de l'atome de chlore et de l'atome de brome; un radical phényle ou un radical phényle substitué par un groupe méthyle, un atome de chlore, un atome de brome, un groupe carboxyle ou un groupe sulfo; ou un radical NHSO₂D₂, où D₂ représente un radical alkyle nonsubstitué ou substitué ayant de 1 à 6 atomes de carbone, un radical phényle ou un radical phényle substitué par un groupe méthyle, un atome de fluor, un atome de chlore ou un atome de brome;
R₄ représente un atome d'hydrogène, un radical SO₃M, un radical NH₂, un radical NHSO₂D₃, où D₃ représente un radical alkyle ayant de 1 à 6 atomes de carbone; un radical phényle ou un radical phényle substitué par un groupe méthyle, un atome de fluor, un atome de chlore ou un atome de brome;
R₅ représente un atome d'hydrogène, un radical SO₃M, un radical COOM ou un radical COND₄D₅ où D₄ et D₅ représentent indépendamment un atome d'hydrogène, un radical alkyle non substitué ou substitué ayant de 1 à 6 atomes de carbone, dans lequel les substituants sont choisis parmi le groupe constitué du radical méthoxy, éthoxy, isopropoxy et hydroxyle
et
R₆ représente un atome d'hydrogène ou un radical SO₃M.

2. Colorants monoazoïques complexes de cuivre selon la revendication 1, **caractérisé par le fait que**
R₁ représente un radical alkyle ayant de 1 à 4 atomes de carbone.

3. Colorants monoazoïques complexes de cuivre selon la revendication 2, **caractérisé par le fait que**
R₂, R₅, R₆ et M sont définis comme à la revendication 1
et
R₃, R₄ représentent indépendamment un atome d'hydrogène ou un radical SO₃M.

4. Colorants monoazoïques complexes de cuivre selon la revendication 3, **caractérisé par le fait que**
R₂, R₆ et M d sont définis comme à la revendication 1
et
R₅ représente un atome d'hydrogène, un radical SO₃M ou un radical COOM.

5. Colorants monoazoïques complexes de cuivre selon une ou plusieurs des revendications 1 à 4, **caractérisé par le fait que**
M représente un atome d'hydrogène, un cation métallique ou un cation ammonium optionnellement substitué par un ou plusieurs radicaux alkyle ou alkyle substitué ou hydroxyalcoxyalkyle ayant chacun de 1 à 12 atomes de carbone.

6. Procédé de préparation des colorants monoazoïques complexes de cuivre selon la revendication 1,
**caractérisé par le fait qu'** une amine aromatique de formule générale (VII) 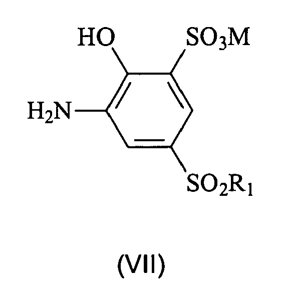 dans laquelle R₁ et M sont définis comme à la revendication 1,
on diazotée , puis coupulée avec un composé de formule (VIII) 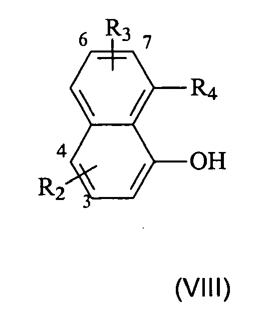 ou (IX) 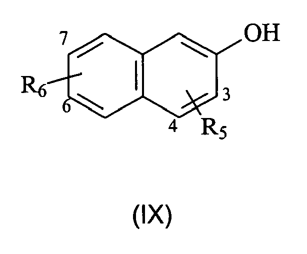 dans lesquelles R₂, R₃, R₄, R₅ et R₆ sont définis comme à la revendication 1,
pour former le colorant intermédiaire non-métallisé
et ensuite
que ce colorant intermédiaire non-métallisé est traité avec un agent de cuivrage conduisant aux colorants monoazoïques complexes de cuivre de formules générales (V) et (VI).

7. Utilisation des colorants monoazoïques complexes de cuivre selon une ou plusieurs des revendications 1 à 5 pour l'enregistrement de caractères ou d'images sur des feuilles d'enregistrement, pour la teinture et l'impression de matériaux fibreux naturels ou synthétiques, de matériaux nanoporeux, du cuir et d'aluminium.

8. Préparations liquides contenant ou moins un colorant monoazoïque complexe de cuivre ou un mélange de colorants monoazoïques complexes de cuivre selon une ou plusieurs des revendications 1 à 5.

9. Encres d'impression selon la méthode du jet d'encre qui comprennent au moins un colorant monoazoïque complexe de cuivre ou un mélange de colorants monoazoïques complexes de cuivre selon une ou plusieurs des revendications 1 à 5.

10. Encres d'impression selon la méthode du jet d'encre qui comprennent un ou plusieurs colorants supplémentaires, à côté d'au moins un colorant monoazoïque complexe de cuivre ou un mélange de colorants monoazoïques complexes de cuivre selon une ou plusieurs des revendications 1 à 5.
